# EUROPEAN PATENT SPECIFICATION

(11) **EP 2 982 900 B1**
(45) Date of publication and mention of the grant of the patent: **04.12.2019**
(21) Application number: 14425105.5
(22) Date of filing: 08.08.2014
(51) Int. Cl.: F21S 8/08, F21V 9/04, H05B 37/00, F21S 9/04, F21S 2/00, F21W 131/103, F21V 21/10

(54) **Pole having external photovoltaic panels**
Mast mit externen photovoltaik Elementen
Poteau avec des panneaux photovoltaïques externes

(43) Date of publication of application: 10.02.2016
(73) Proprietor: Falchetti, Gianni, 06035 Gualdo Cattaneo (PG) (IT)
(72) Inventor: Chiacchieroni, Alfredo, San Venanzo (TR) (IT)
(74) Representative: Cutropia, Gianluigi

(56) References cited:
- WO-A2-2012/045467
- DE-A1-102007 041 842
- US-A1- 2008 137 327
- US-A1- 2010 029 268
- US-A1- 2011 305 010

## Description

The present invention relates to a pole having a plurality of external photovoltaic panels on itself.

The European Patent EP 0 849 524 describes a pole comprising a plurality of solar cell modules that are arranged over the entire surface of the peripheral wall of the pole having a square cross-section. The modules are located in such a way that a module is exposed to solar rays from the south when the sun is at its highest point above the horizon at noon, another module to solar rays from the east in the morning and another module to solar rays from the west at sunset. In this way there is generally such a sunshine on panels that solar energy is obtained efficiently. In the above cited European patent the solar cell modules are used to power a battery. For this reason there is no problem of how to arrange the collection of the electrical energy during the day. In other words, it is not important that the solar cell modules provide a constant supply during the daytime.

The British Patent Application GB 2 388 974 describes a solar power generation and illumination system including a lamp and a solar panel mounted on the top of a common lamp pole. The lamp is supplied from the grid through a circuit breaker. A DC to AC inverter supplies power produced by the solar panel to the grid through the circuit breaker. An interface unit coupled to the DC to AC inverter allows to download data about the power produced by the solar panel. The lamp is equipped with a twilight switch so as to be turned on and off in response to ambient lighting conditions.

Further, the German Patent Application DE 197 23 617 describes various embodiments of a solar power generation and illumination system including a lamp and a solar panel mounted on the top of a common lamp pole. The lamp is powered through a twilight switch. A DC to AC inverter supplies power produced by the solar panel to the grid. In one embodiment, the power produced by the solar panel and the one absorbed by the lamp are transmitted on different conductors. In another embodiment, the power produced by the solar panel and the one absorbed by the lamp are transmitted on the same conductors. Meters allow to download data relating to the power produced by the solar panel and the power absorbed by the lamp.

Both the British Patent Application GB 2388974 and the German Patent Application DE 197 23 617 describe a lighting pole, on which a lamp, a single solar panel connected through an inverter to the grid, a twilight, and a switch are mounted and suitably connected. As noted above, a single panel mounted on a pole does not allow a constant supply to be provided during the daylight hours just for the difference of insolation that occurs during the day. Therefore, the English and German Patent Applications mentioned above have this deficiency. In addition, they do not explain how the individual inverters are connected to the grid, which is designed as a single wire.

WO 2012/045467 A2 discloses a pole having external photovoltaic panels, being of a triangular shaped cross-section so as to create three walls on which three related photovoltaic panels are arranged, the pole holding a luminaire with lamp.

From above, it should be understood that the problem of the today's solar power suppliers on poles consists in the fact that they do not provide constant power to the grid during the daylight hours and that in case of a three-phase system do not supply the three phases in a uniform manner.

In this context, the technical task underlying the present invention is to propose a pole having a plurality of external photovoltaic panels that overcomes the drawbacks of the prior art mentioned above.

One object of the present invention is to enable an almost constant solar power supply to a three-phase grid during daylight hours.

Another object of the present invention is to supply substantially uniform solar power to single phases of a three-phase grid at any time without creating sudden changes in voltage between one phase and another.

The technical task mentioned and the objects specified are substantially achieved by a pole having a plurality of external photovoltaic panels on itself, comprising the technical features exposed in one or more of the appended claims.

Further features and advantages of the present invention will become more apparent from the indicative, and therefore non-limiting, description of a preferred but not exclusive embodiment of the present invention, as illustrated in the accompanying drawings in which:
Figure 1 is a perspective view of a photovoltaic pole according to the present invention;
Figure 2 is a partial schematic representation of a system with three-phase grid powered by a multiplicity of poles with photovoltaic panels according to the present invention; and
Figure 3 is a schematic view of an inverter connected to a luminaire with lamp on a pole with photovoltaic panels according to the present invention.

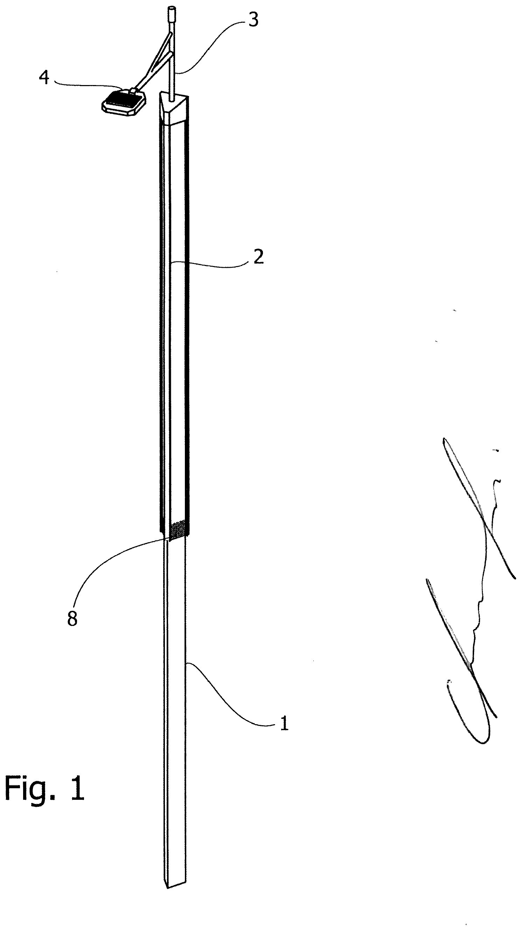

Referring initially to Figure 1, therein is shown a pole 1 according to the present invention in a perspective view. The pole 1 has a cross-section of triangular shape. Arranged on the three walls of the pole are photovoltaic panels generally indicated as 2 at such a height that they cannot be reached from the ground. Mounted on the top of the pole 1 with adequate support 3 is a luminaire 4 with a lamp.

A multiplicity of poles according to the invention is used in a solar power generation and illumination system connected to a three-phase grid whose phase conductors are denoted as F1, F2, F3 and the neutral as N. Conventionally, installed on the portion of concerned grid are a meter 5 of the grid operator and a photovoltaic meter 6 to measure the solar power production of the system.

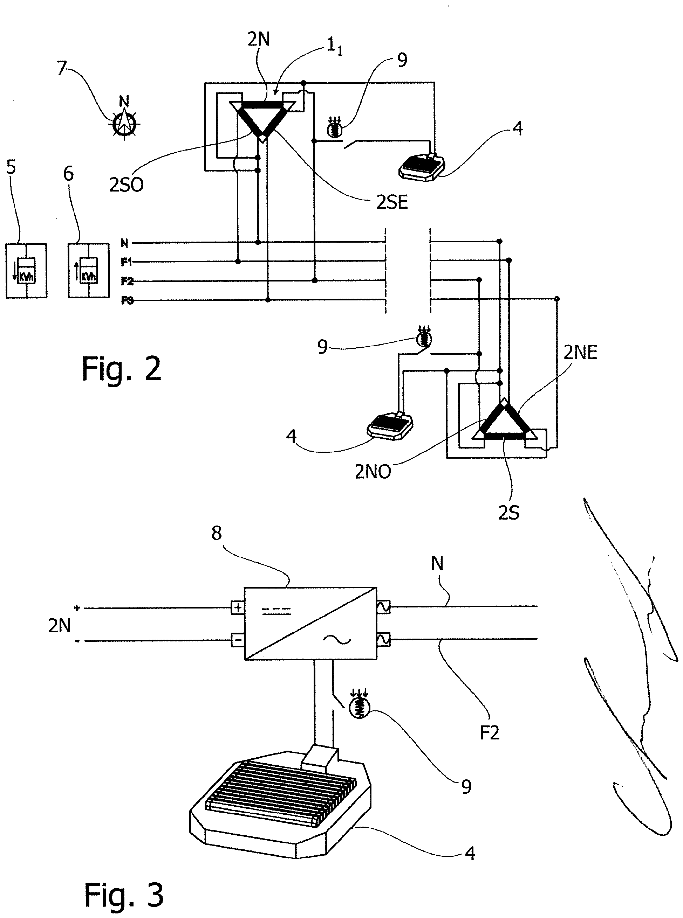

In Figure 2, which is a partial schematic representation of the system, denoted as 1₁ is a first pole and as 1ₙ a nth pole of a multiplicity of poles. Three photovoltaic panels are represented on each pole as in a top plan view in the shape of an isosceles triangle.

All poles 1₁, ... 1ₙ are identical to each other, but on the basis of their arrangement on the ground give a different orientation of their photovoltaic panels with respect to the sun. For example, as shown in Figure 1, the three photovoltaic panels of the first pole 1₁ are denoted as 2N, 2SO, and 2SE, with reference to the cardinal points of the compass indicated as 7. The nth pole 1ₙ has three photovoltaic panels denoted as 2NO, 2NE, and 2S, with reference to the same compass 7. The poles 1₁ ... 1ₙ alternate in a symmetrically opposed arrangement in a manner that positioned in the base of the isosceles triangular-shaped pole is a panel 2N, i.e. facing North, and positioned in the base of a next isosceles triangular-shaped pole is a panel 2S, i.e. facing South. With this arrangement the panels 2N and 2S of two consecutive poles are mutually opposite, while the other panels of two consecutive poles 2SO and 2SE and 2NO and 2NE, respectively, are arranged so that the panel 2SE of a pole is parallel to and facing the panel 2NO of the next pole, and the panel 2NE of a pole is parallel to and facing the panel 2SO of the next pole.

Associated to each photovoltaic panel 2 on the same poles 1₁ - 1ₙ is an inverter 8 schematically depicted in Figure 1. The inverter 8 of the first pole 1₁, represented symbolically in Figure 3, is connected on one side to the own photovoltaic panel 2N and on the other side to the phase F2 and to the neutral N, and also to the luminaire 4 with lamp through a twilight switch 9, as shown also in Figure 2.The remaining panels of the first pole 1₁, 2SO and 2SE, are connected on one side to the neutral N of the grid and on the other side to the phase F1 and to the phase F3, respectively.

Similarly, the inverter 8 of the nth pole 1ₙ is connected on one side to the own photovoltaic panel 2NO and on the other to the phase F2 and to the neutral N, and also to the luminaire 4 with lamp through a twilight switch 9.

The other panels of the nth pole 1ₙ, 2NE and 2S, are connected, on one hand, to the neutral N of the grid and, on the other end, to the phase F1 and to the phase F3, respectively. Even if the connections of all n poles are not explained here, it should be understood that the same phases are fed, according to the present invention, by photovoltaic panels situated on different poles with different orientations so as to provide a substantially constant power supply to the same phase during the daylight hours, and a substantially uniform power supply to all the phases of the grid, without changes in voltage between one phase and the other.

At night or in poor lighting conditions, the twilight switch 9 of each pole 1₁, ... 1ₙ, closes the circuit providing the power supply to the lamp of the luminaire 4 from the mains and possibly also from the relative photovoltaic panel, which is indicated as 2N for the pole 1₁ and as 2NO for the pole 1ₙ, in the embodiment shown in Figure 2.

The meter 5 of the grid operator calculates the energy consumed by lighting lamps, while the photovoltaic meter 6 calculates the power produced by the photovoltaic panels.

It should be understood that the objects of the present invention are achieved, namely to enable an almost constant solar power supply to a three phase grid during daylight hours throughout the day, and a substantially uniform solar power supply to the single phases of a three phase grid at any time without creating sudden changes in voltage between one phase and another.

## Claims

1. A solar power generation and illumination system comprising a plurality of equal poles (1₁ - 1ₙ), each pole having external photovoltaic panels, being of a triangular shaped cross-section so as to create three walls on which three related photovoltaic panels (2) are arranged, the pole holding a luminaire (4) with lamp,
the solar power generation and illumination system is connected to a three phase grid having a first, a second and a third phase conductor (F1, F2, F3), a neutral (N), a meter (5) of the grid manager and a photovoltaic meter (6) adapted to measure the production of the solar power by the system, a DC to AC inverter (8) whose ends in turn are connected to the neutral (N) and a respective phase conductor (F1, F2, F3) of the three phase grid being connected to each of the three photovoltaic panels (2), **characterized in that** said plurality of poles (1₁ - 1ₙ) are placed on the ground in an alternating arrangement symmetrically opposed in a manner that three photovoltaic panels (2N, 2SO, 2SE) of a first pole (1₁) are directed respectively to North, South West and South East, three photovoltaic (2NO, 2NE, 2S) of a next pole (1₂) are directed respectively to North West, North East and South;
all poles of the plurality of poles (1₁ - 1ₙ) are connected such that the same phases are fed, by photovoltaic panels situated on different poles with different orientations so as to provide a substantially constant power supply to the same phase during the daylight hours.

2. The solar power generation and illumination system according to claim 1, **characterized in that** the inverter (8) of the first pole (1₁) is connected on one side to the own photovoltaic panel (2N) and on the other to the second phase conductor (F2) and to neutral (N), and also to the luminaire (4) with lamp through a twilight switch (9), the other panels (2SO and 2SE) of the first pole (1₁) being connected on one side to neutral (N) of the grid and on the other to the first phase conductor (F1) and the third phase conductor (F3), respectively.

3. The solar power generation and illumination system according to claim 1, **characterized in that** the inverter (8) of the next pole (1₂) is connected on one side to the own photovoltaic panel (2NO) and on the other to the second phase conductor (F2) and to neutral (N), and also to the luminaire (4) with lamp through a twilight switch (9), the other panels (2NE and 2S) of the next pole (1₂) being connected on one side to neutral (N) of the grid and by on the other to the first phase conductor (F1) and the third phase conductor (F3), respectively.

## Patentansprüche

1. Solarstromerzeugungs- und Beleuchtungsanlage, umfassend eine Mehrzahl von Masten (1₁ - 1ₙ), die gleich sind, wobei jeder Mast externe Photovoltaikmodule trägt und einen dreieckigen Querschnitt aufweist, um drei Wände zu bilden, auf denen drei zugehörige Photovoltaikmodule (2) angeordnet sind, wobei der Mast eine Beleuchtungsvorrichtung (4) mit Leuchte trägt,
wobei die Solarstromerzeugungs- und Beleuchtungsanlage an einem Drehstromnetz mit einem ersten, einem zweiten und einem dritten Phasenleiter (F1, F2, F3), einem Neutralleiter (N), einem Zähler (5) des Netzbetreibers und einen Photovoltaikzähler (6) angeschlossen ist, der dazu geeignet ist, die Solarstromerzeugung der Anlage zu messen, einem Gleichstrom-Wechselstromrichter (8), dessen Anschlüsse wiederum an den Neutralleiter (N) und an einem jeweiligen Phasenleiter (F1, F2, f3) des Drehstromnetzes angeschlossen ist, der an jedem der drei Photovoltaikmodule (2) angeschlossen ist, **dadurch gekennzeichnet, dass** die Mehrzahl von Masten (1₁ - 1ₙ) auf dem Boden abwechselnd, symmetrisch gegenüberliegend so platziert ist, dass drei Photovoltaikmodule (2N, 2SO, 2SE) eines ersten Masten (1₁) nach Norden, Südwesten und Südosten ausgerichtet sind und drei Photovoltaikmodule (2NO, 2NE, 2S) eines nachfolgenden Masten (1₂) nach Nordwesten, Nordosten und Süden ausgerichtet sind;
wobei alle Masten der Mehrzahl von Masten (1₁ -1ₙ) so angeschlossen sind, dass die gleichen Phasen von Photovoltaikmodulen gespeist werden, die auf verschiedenen Masten mit unterschiedlichen Ausrichtungen angeordnet sind, um eine im Wesentlichen konstante Stromversorgung der gleichen Phase während der Tageslichtstunden zu gewährleisten.

2. Solarstromerzeugungs- und Beleuchtungsanlage nach Anspruch 1, **dadurch gekennzeichnet, dass** der Wechselrichter (8) des ersten Masten (1₁) auf einer Seite an seinem Photovoltaikmodul (2N) und auf der anderen Seite an dem zweiten Phasenleiter (F2) und dem Neutralleiter (N) sowie an der Beleuchtungsvorrichtung (4) mit Leuchte über einen Dämmerungsschalter (9) angeschlossen ist, wobei die anderen Module (2SO und 2SE) des ersten Masten (1₁) auf einer Seite an dem Neutralleiter (N) des Netzes und auf der anderen Seite an dem ersten Phasenleiter (F1) bzw. dem dritten Phasenleiter (F3) angeschlossen sind.

3. Solarstromerzeugungs- und Beleuchtungsanlage nach Anspruch 1, **dadurch gekennzeichnet, dass** der Wechselrichter (8) des nachfolgenden Masten (1₂) auf der einen Seite an seinem Photovoltaikmodul (2NO), auf der anderen Seite an dem zweiten Phasenleiter (F2) und dem Neutralleiter (N) sowie an der Beleuchtungsanlage (4) mit Leuchte über einen Dämmerungsschalter (9) angeschlossen ist, wobei die anderen Module (2NE und 2S) des nachfolgenden Masten (1₂) auf der einen Seite an dem Neutralleiter (N) des Netzes und auf der anderen Seite an dem ersten Phasenleiter (F1) bzw. dem dritten Phasenleiter (F3) angeschlossen sind.

## Revendications

1. Système de production d'énergie solaire et d'éclairage comprenant une pluralité de poteaux (1₁- 1ₙ) identiques, chaque poteau portant des panneaux photovoltaïques externes, ayant une section de forme triangulaire, de manière à créer trois parois sur lesquelles sont disposés trois relatifs panneaux photovoltaïques (2), le poteau portant un plafonnier (4) avec une lampe,
le système de production d'énergie solaire et d'éclairage est connecté à un réseau triphasé ayant un premier, un deuxième et un troisième conducteur de phase (F1, F2, F3), un neutre (N), un compteur (5) du gestionnaire du réseau et un compteur photovoltaïque (6) apte à mesurer la production d'énergie solaire du système, un inverseur de DC à AC (8) dont les bornes sont à leur tour branchées au conducteur de neutre (N) et à un respectif conducteur de phase (F1, F2, f3) du réseau triphasé, étant chacun branché à chacun des trois panneaux photovoltaïques (2), **caractérisé en ce que** ladite pluralité de poteaux (1₁ - 1ₙ) est située sur le terrain dans une disposition alternée, symétriquement opposée, de façon que les trois panneaux photovoltaïques (2N, 2S0, 2SE) d'un premier poteau (1₁) soient orientés respectivement vers le Nord, le Sud-Ouest et le Sud-Est, et trois panneaux photovoltaïques (2N0, 2NE, 2S) d'un poteau successif (1₂) soient orientés respectivement vers le Nord-Ouest, le Nord-Est et le Sud,
tous les poteaux de la pluralité de poteaux (1₁ - 1ₙ) sont branchés de façon que les mêmes phases soient alimentées par des panneaux photovoltaïques disposés sur divers poteaux ayant des orientations différentes, de manière à fournir une alimentation pratiquement constante à la même phase pendant les heures du jour.

2. Système de production d'énergie solaire et d'éclairage selon la revendication 1, **caractérisé en ce que** l'inverseur (8) du premier poteau (1₁) est branché d'un côté à son propre panneau photovoltaïque (2N) et de l'autre côté au deuxième conducteur de phase (F2) et au neutre (N), et également au plafonnier (4) avec lampe moyennant un interrupteur crépusculaire (9), les autres panneaux (2S0 et 2SE) du premier poteau (1₁) étant branchés d'un côté au neutre (N) du réseau et de l'autre côté au premier conducteur de phase (F1) et, respectivement, au troisième conducteur de phase (F3).

3. Système de production d'énergie solaire et d'éclairage selon la revendication 1, **caractérisé en ce que** l'inverseur (8) du poteau successif (1₂) est branché d'un côté à son propre panneau photovoltaïque (2NO) et de l'autre côté au deuxième conducteur de phase (F2) et au neutre (N), et également au plafonnier (4) avec lampe moyennant un interrupteur crépusculaire (9), les autres panneaux (2NE et 2S) du poteau successif (1₂) étant branchés d'un côté au neutre (N) du réseau et de l'autre côté au premier conducteur de phase (F1) et, respectivement, au troisième conducteur de phase (F3).
